# FASCICULE DE BREVET EUROPEEN

(11) **EP 3 424 156 B1**
(45) Date de publication et mention de la délivrance du brevet: **17.11.2021**
(21) Numéro de dépôt: 17707361.6
(22) Date de dépôt: 02.03.2017
(51) Int. Cl.: H04B 7/185, H04B 7/204

(54) **PROCEDE DE TELECOMMUNICATION DANS UN SYSTEME A COUVERTURE GEOGRAPHIQUE MULTI-SPOTS, STATION TERRESTRE ET DISPOSITIF RELAIS CORRESPONDANTS**
VERFAHREN ZUR TELEKOMMUNIKATION IN EINEM SYSTEM MIT GEOGRAFISCHER MULTI-SPOT-ABDECKUNG, ENTSPRECHENDE TERRESTRISCHE STATION UND RELAISVORRICHTUNG
METHOD OF TELECOMMUNICATION IN A SYSTEM WITH MULTI-SPOT GEOGRAPHICAL COVERAGE, CORRESPONDING TERRESTRIAL STATION AND RELAY DEVICE

(30) Priorité: 04.03.2016 FR 1651844
(43) Date de publication de la demande: 09.01.2019
(73) Titulaire: IRT Saint Exupery (AESE), 31432 Toulouse (FR)
(72) Inventeur: MESNAGER, Gilles, 31810 Clermont Le Fort (FR); DECROIX, Jacques, 31450 Odars (FR); SOMBRIN, Jacques, 31400 Toulouse (FR)
(74) Mandataire: Ipside
(86) Numéro de dépôt international: PCT/EP2017/054968
(87) Numéro de publication internationale: WO 2017/149100

(56) Documents cités:
- EP-A1- 2 104 242
- EP-A1- 2 723 001
- US-A1- 2009 042 562
- CHRISTOPOULOS DIMITRIOS ET AL: "Multi-User Detection in Multibeam Mobile Satellite Systems: A Fair Performance Evaluation", 2013 IEEE 77TH VEHICULAR TECHNOLOGY CONFERENCE (VTC SPRING), IEEE, 2 juin 2013 (2013-06-02), pages 1-5, XP032547814, ISSN: 1550-2252, DOI: 10.1109/VTCSPRING.2013.6692647 [extrait le 2013-12-22]
- LOMBARDO F ET AL: "Multi-gateway interference cancellation techniques for the return link of multi-beam broadband satellite systems", GLOBAL COMMUNICATIONS CONFERENCE (GLOBECOM), 2012 IEEE, IEEE, 3 décembre 2012 (2012-12-03), pages 3425-3430, XP032375201, DOI: 10.1109/GLOCOM.2012.6503644 ISBN: 978-1-4673-0920-2

## Description

### 1. DOMAINE TECHNIQUE

Le domaine de l'invention est celui des télécommunications via un dispositif relais, de type satellite ou aéronef. Par aéronef, on entend notamment un avion, un drone, un dirigeable ou un ballon. Il s'agit par exemple d'une plateforme de haute altitude (HAP (pour « High Altitude Platform») ou HAPS (pour « High altitude platform station» ou « High Altitude Pseudo-Satellite »), aussi appelée plateforme stratosphérique.

Un tel dispositif relais de type satellite ou aéronef possède des antennes de réception qui reçoivent des signaux émis depuis des stations terrestres (aussi appelées « stations au sol », ou « ground stations » dans la littérature anglo-saxonne). Dans le dispositif relais, ces signaux sont filtrés, transposés en fréquence et amplifiés, puis retransmis (par des antennes de transmission) vers la Terre.

Plus précisément, l'invention concerne un procédé de télécommunication, via un dispositif relais de type satellite ou aéronef, dans un système à couverture géographique multi-spots (ou « system with a multi-spot geographical coverage », ou encore plus simplement « multi-spot system », en anglais), avec un schéma de réutilisation à N couleurs, ce procédé portant sur l'optimisation de la voie aller et permettant de mettre en œuvre des algorithmes d'annulation d'interférences intra-systèmes.

### 2. ARRIÈRE-PLAN TECHNOLOGIQUE

Dans la suite de ce document, on s'attache plus particulièrement à décrire la problématique existant dans les systèmes de télécommunication par satellite. L'invention ne se limite bien sûr pas à ce domaine particulier d'application, mais présente un intérêt pour tout système de télécommunications via un dispositif relais, de type satellite ou aéronef, devant faire face à une problématique proche ou similaire.

Les systèmes de télécommunication par satellite utilisent généralement comme média la propagation d'onde hertzienne dans le vide. Ces ondes sont caractérisées par leur longueur d'onde et leur bande passante. L'augmentation du débit d'information à transmettre (télécommunications haut débits) entraîne l'augmentation de la bande passante requise. La raréfaction des bandes de fréquences hertziennes disponibles nécessite de trouver de nouvelles solutions.

Une première solution connue pour accroître la capacité est la migration vers des bandes de fréquences plus élevées : passage par exemple de la bande Ku à la bande Ka et maintenant à la bande Q/V, encore plus élevée. Cette solution repose sur les progrès des technologies permettant de traiter des signaux numériques et analogiques de plus en plus rapides. Elle tend cependant vers ses limites en raison des limites technologiques de réalisation des équipements et de la saturation des plans de fréquence. On envisage aujourd'hui de diminuer encore les longueurs d'onde, en passant de la propagation hertzienne vers la propagation optique (télécommunications laser). Mais la contrepartie est la maîtrise de la propagation en espace libre dans l'atmosphère, qui reste encore à ce jour à un niveau de maturité insuffisant pour les fréquences optiques.

Une deuxième solution connue consiste à optimiser l'efficacité spectrale de transmission en agissant sur deux axes : l'amélioration de la directivité des diagrammes d'antennes qui permet de réduire les interférences co-fréquence des spots adjacents au spot d'intérêt, et la recherche de formes d'ondes qui permettent de maximiser le nombre de bits transmis dans une bande de fréquence donnée.

Une troisième solution connue, pour augmenter la capacité des systèmes de télécommunication par satellite (i.e. acheminer de forts débits d'information), repose sur la mise en œuvre de systèmes à couverture géographique multi-spots, avec un schéma de réutilisation de fréquences dit « à N couleurs » (N est aussi appelé « facteur de réutilisation »). Un exemple d'un tel système à couverture géographique multi-spots est présenté en détail dans le document de brevet US2009/0023384A1. On entend par « couleur » une bande de fréquence, ou bien un couple associant une bande de fréquence et une polarisation, utilisé(e) pour transmettre de l'information. Par définition, deux couleurs sont distinctes si leurs bandes de fréquence ne se recouvrent pas, ou si leurs polarisations sont différentes. Sur les liaisons descendantes de la voie aller, chaque couleur est réutilisée sur des zones géographiques différentes (appelées « spots »). Le document de brevet US2009/042562 divulgue un système de télécommunications par satellite selon l'art antérieur. Le document de brevet EP2104242A1 divulgue un autre système de télécommunications par satellite à couverture multifaisceaux et à réutilisation de fréquences.

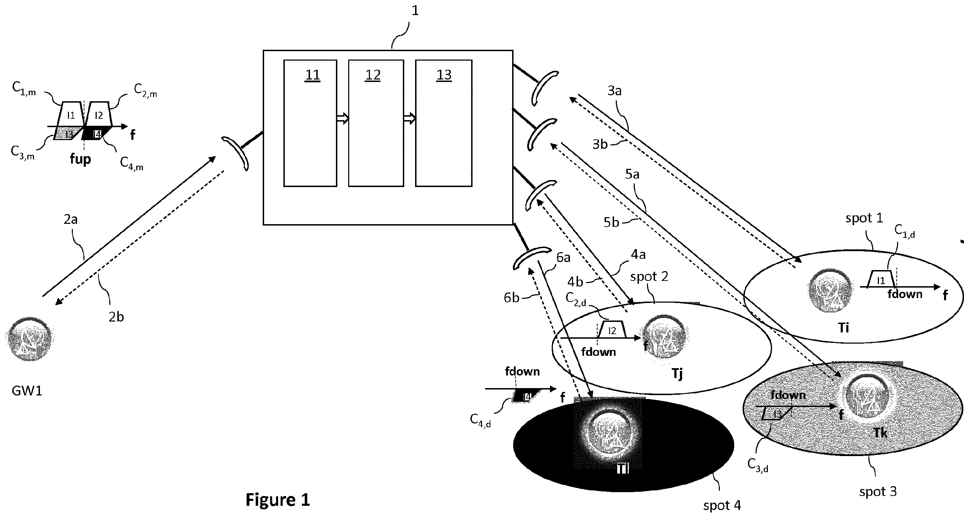

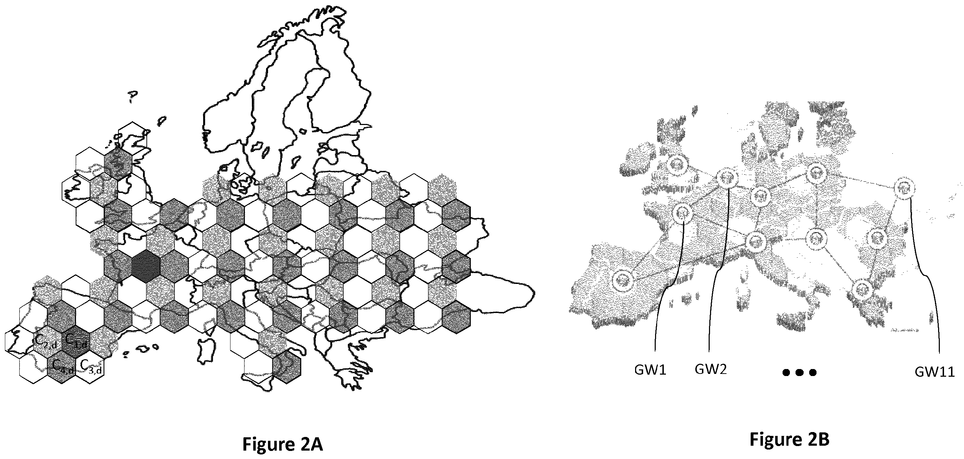

La **figure 1** illustre un exemple d'un tel système de télécommunication satellitaire à couverture géographique multi-spots. La **figure 2A** illustre le déploiement sur la zone Europe du système multi-spots de la **figure 1**.

Ce système comprend une voie aller pour transmettre des informations, via un satellite 1, depuis une pluralité de stations terrestres (une seule, référencée GW1, est représentée sur la **figure 1****)** vers une pluralité de terminaux (quatre, référencés Ti, Tj, Tk et Tl, sont représentés sur la **figure 1****)** localisés dans des spots (référencés « spot 1 » à « spot 4 ») répartis dans une zone de couverture géographique terrestre. Le satellite 1 (et plus précisément sa charge utile) comprend un bloc de multiplexage d'entrée 11, un bloc d'amplification 12 et un bloc de multiplexage de sortie 13. La voie aller comprend une pluralité de liaisons montantes (une seule, référencée 2a, est représentée sur la **figure 1****),** chacune depuis une des stations terrestres vers le satellite, et une pluralité de liaisons descendantes (quatre, référencées 3a, 4a, 5a et 6a, sont représentées sur la **figure 1****),** chacune depuis le satellite vers un des spots. Le système est de type « unicast » si un seul terminal peut être utilisé dans chaque spot, ou de type « multicast » si plusieurs terminaux peuvent être utilisés simultanément dans chaque spot.

Chacune des liaisons montantes utilise N premières couleurs autour d'une fréquence montante fᵤₚ, avec N≥2. Dans l'exemple de la **figure 1****,** on a N=4 et la liaison montante 2a (depuis la station terrestre GW1) est associée aux couleurs C_{1,m}, C_{2.m}, C_{3,m} et C_{4,m}, qui transmettent respectivement les informations I1, I2, I3 et I4. La couleur C_{1,m} correspond au couple associant une bande de fréquence inférieure à la fréquence fᵤₚ et une polarisation circulaire droite. La couleur C_{2,m} correspond au couple associant une bande de fréquence supérieure à la fréquence fᵤₚ et une polarisation circulaire droite. La couleur C_{3,m} correspond au couple associant une bande de fréquence inférieure à la fréquence fᵤₚ et une polarisation circulaire gauche. La couleur C_{4,m} correspond au couple associant une bande de fréquence supérieure à la fréquence fᵤₚ et une polarisation circulaire gauche.

Chacune des liaisons descendantes est associée à une seconde couleur dans un schéma de réutilisation à N secondes couleurs autour d'une fréquence descendante f_{down}, avec N≥2. Dans l'exemple de la **figure 1****,** on a N=4 et les liaisons descendantes 3a, 4a, 5a et 6a sont associées aux couleurs C_{1,d}, C_{2,d}, C₃,_{d} et C_{4,d} respectivement, et ces dernières transmettent respectivement les informations I1, I2, I3 et I4 (provenant de la station terrestre GW1). La couleur C_{1,d} correspond au couple associant une bande de fréquence inférieure à la fréquence f_{down}, et une polarisation circulaire droite (RHCP, pour « Right Hand Circularly Polarized »). La couleur C_{2,d} correspond au couple associant une bande de fréquence supérieure à la fréquence f_{down}, et une polarisation circulaire droite. La couleur C₃,_{d} correspond au couple associant une bande de fréquence inférieure à la fréquence f_{down}, et une polarisation circulaire gauche (LHCP, pour « Left Hand Circularly Polarized »). La couleur C_{4,d} correspond au couple associant une bande de fréquence supérieure à la fréquence f_{down}, et une polarisation circulaire gauche.

Dans l'exemple de la **figure 1****,** le système comprend également une voie retour pour transmettre des informations, via le satellite 1, depuis la pluralité de terminaux vers la pluralité de stations terrestres. La voie retour comprend une pluralité de liaisons montantes (quatre, référencées 3b, 4b, 5b et 6b, sont représentées sur la **figure 1****),** chacune depuis un des terminaux vers le satellite, et une pluralité de liaisons descendantes (une, référencée 2b, est représentée sur la **figure 1****),** chacune depuis le satellite vers une des stations terrestres.

Dans un système de télécommunication satellitaire à couverture géographique multi-spots, avec un schéma de réutilisation à N couleurs, la séparation des informations transportées à la même couleur est réalisée par les diagrammes des antennes d'émission du satellite. C'est donc la directivité des antennes d'émission du satellite qui permet de concentrer l'énergie du signal émis dans une couleur donnée sur les spots correspondants. Ce «filtrage spatial» limite l'interférence entre deux spots de même couleur. Mais il est malheureusement imparfait et il existe des interférences entre spots de même couleur (aussi appelées « interférences intra-systèmes ») qui limitent la capacité du système.

Il existe donc un besoin d'annuler, ou à tout le moins limiter au maximum, ces interférences intra-systèmes, afin de permettre des schémas de réutilisation de couleurs plus agressifs, et ainsi multiplier la capacité du système satellitaire. Ceci constitue un enjeu d'envergure pour les télécommunications spatiales.

Une solution connue pour limiter les interférences intra-systèmes consiste à augmenter le nombre de couleurs et à isoler les spots de même couleur en interposant des spots de couleurs différentes. Cette solution présente l'inconvénient de diviser la capacité théorique du système par deux à chaque fois qu'on double le nombre de couleurs.

Une autre solution connue consiste à utiliser dans les stations terrestres des algorithmes d'annulation d'interférences. Ces algorithmes permettent de soustraire à l'émission (c'est-à-dire dans les stations terrestres), pour l'information destinée à un spot, les informations interférentes destinées aux spots adjacents de même couleur.

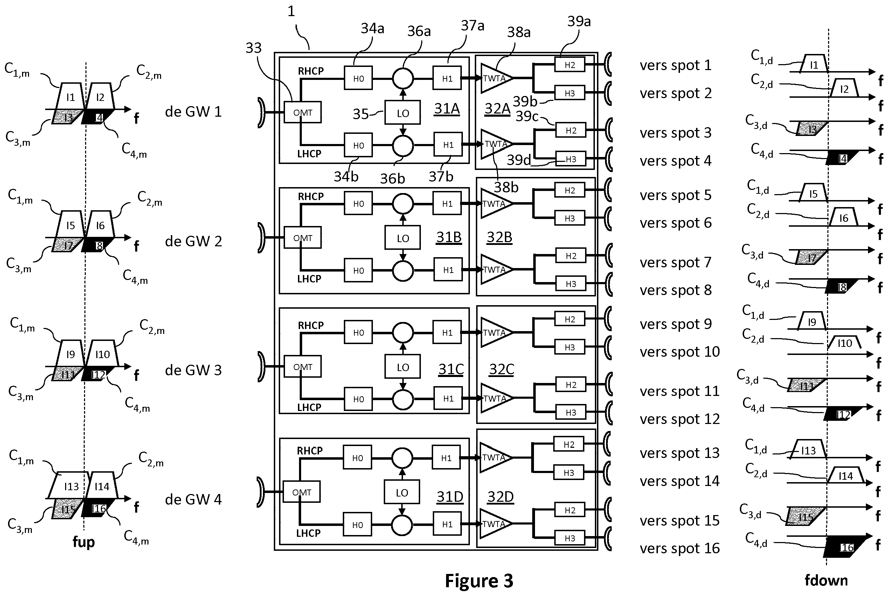

Dans les configurations actuelles, plusieurs stations terrestres sont utilisées pour transmettre vers le satellite les informations que ce dernier va retransmettre avec une même couleur. En d'autres termes, et en référence à la **figure 3** détaillée ci-après, pour une couleur donnée (par exemple C_{1,d}) utilisée par le satellite pour transmettre vers plusieurs spots (par exemple les spots 1, 5, 9 et 13), les informations correspondantes (par exemple I1, I5, I9 et I13) sont fournies au satellite par plusieurs stations terrestres (GW1 à GW4).

Un exemple d'une telle configuration est illustré sur le schéma de la **figure 3****,** représentant les signaux reçus et transmis par le satellite 1. Sur cet exemple, le système comprend seize spots (i.e. le satellite émet sur 16 faisceaux, avec 16 liaisons descendantes), alimentés par quatre stations terrestres GW1 à GW4.

La station terrestre GW1 transmet au satellite les informations I1, I2, I3 et I4, sur les premières couleurs C_{1,m}, C_{2.m}, C_{3,m} et C_{4,m} respectivement (cf. définitions plus haut). La station terrestre GW2 transmet au satellite les informations I5, I6, I7 et I8, sur les mêmes premières couleurs C_{1,m}, C_{2.m}, C_{3,m} et C_{4,m} respectivement. La station terrestre GW3 transmet au satellite les informations I9, I10, I11 et I12, sur les mêmes premières couleurs C_{1,m}, C_{2.m}, C_{3,m} et C_{4,m} respectivement. La station terrestre GW4 transmet au satellite les informations I13, I14, I15 et I16, sur les mêmes premières couleurs C_{1,m}, C_{2.m}, C_{3,m} et C_{4,m} respectivement.

Le satellite retransmet les informations I1, I2, I3 et I4 vers les spots 1, 2, 3 et 4 respectivement, sur les secondes couleurs C_{1,d}, C_{2,d}, C₃,_{d} et C_{4,d} respectivement (cf. définitions plus haut). Il retransmet les informations I5, I6, I7 et I8 vers les spots 5, 6, 7 et 8 respectivement, sur les mêmes secondes couleurs C_{1,d}, C_{2,d}, C₃,_{d} et C_{4,d} respectivement. Il retransmet les informations I9, I10, I11 et I12 vers les spots 9, 10, 11 et 12 respectivement, sur les mêmes secondes couleurs C_{1,d}, C_{2,d}, C₃,_{d} et C_{4,d} respectivement. Il retransmet les informations I13, I14, I15 et I16 vers les spots 13, 14, 15 et 16 respectivement, sur les mêmes secondes couleurs C_{1,d}, C_{2,d}, C₃,_{d} et C_{4,d} respectivement.

Typiquement, et comme représenté sur la **figure 3****,** l'architecture de la charge utile du satellite comprend une chaîne de traitement (comprenant elle-même deux blocs 31A/B/C/D et 32A/B/C/D) pour traiter les signaux provenant de chacune des stations terrestres. Par exemple, pour les signaux provenant de la station terrestre GW1, la chaîne de traitement comprend les blocs 31A et 32A. Le bloc 31A comprend lui-même un duplexeur de polarisation (OMT, pour « Orthogonal Mode Transducer ») 33, permettant de séparer les signaux selon leur polarisation (polarisation circulaire droite (RHCP) ou gauche (LHCP)), et deux branches dédiées chacune à une polarisation distincte. Chaque branche du bloc 31A comprend un premier filtre (H0) 34a, 34b, suivi d'un transposeur de fréquence 36a, 36b (effectuant une transposition du spectre reçu, de la fréquence fᵤₚ vers la fréquence f_{down}, par multiplication par une fréquence fournie par un oscillateur local (LO, pour « Local Oscillator ») 35) et un second filtre (H1) 37a, 37b. Le bloc 32A comprend également deux branches dédiées chacune à une polarisation distincte. Chaque branche du bloc 32A comprend un amplificateur (TWTA, pour « Travelling Wave Tube Amplifier ») 38a, 38b (recevant le signal de sortie du second filtre de l'une des deux branches du bloc 31A), dont la sortie alimente deux filtres (H2) 39a, 39c et (H3) 39b, 39d disposés en parallèle et permettant de découper le signal en deux sous-bandes, correspondant aux couleurs C_{1,d} et C_{2,d} pour la polarisation circulaire droite (couleurs utilisées pour l'émission vers les spots 1 et 2) et aux couleurs C₃,_{d} et C_{4,d} pour la polarisation circulaire gauche (couleurs utilisées pour l'émission vers les spots 3 et 4).

Cette architecture de la charge utile du satellite a été adoptée car elle présente l'avantage de simplifier les chaînes de traitement, dont chaque branche ne nécessite qu'un transposeur de fréquence (36a ou 36b pour les deux branches de la chaîne de traitement des signaux provenant de la station terrestre GW1).

On voit dans l'exemple de la **figure 1** que les informations I1, I5, I9 et I13, transmises par le satellite avec la même couleur C_{1,d} vers les spots 1, 5, 9 et 13 respectivement, sont issues des quatre stations terrestres GW1 à GW4 (disjointes de plusieurs centaines de kilomètres, pour les raisons de séparation évoquées plus haut). Il en est de même pour : les informations I2, I6, I10 et I14 transmises avec la couleur C_{2,d} vers les spots 2, 6, 10 et 14 respectivement; les informations I3, I7, I11 et I15 transmises avec la couleur C₃,_{d} vers les spots 3, 7, 11 et 15 respectivement ; et les informations I4, I8, I12 et I16 transmises avec la couleur C_{4,d} vers les spots 4, 8, 12 et 16 respectivement.

L'utilisation des algorithmes d'annulation d'interférences nécessite donc que chaque station terrestre, émettant vers le satellite des informations destinées à un spot d'une couleur donnée (c'est-à-dire que le satellite va réémettre avec cette couleur), connaisse les informations interférentes, c'est-à-dire les informations transmises par le satellite vers les premiers spots adjacents de même couleur.

Pour que chaque station terrestre ait connaissance des informations interférentes lui permettant d'utiliser les algorithmes d'annulation d'interférences, on connaît notamment :
- une première architecture connue, dans laquelle une infrastructure sol, constituée d'un réseau de communication entre les stations terrestres, est utilisée pour acheminer les informations interférentes, ainsi que les paramètres de correction à appliquer pour corriger les interférences. Un exemple de maillage entre onze stations terrestres (GW1 à GW11) est illustré sur la **figure 2B** (couverture Europe) ;
- une deuxième architecture connue, dans laquelle un point unique d'une infrastructure sol a connaissance de toutes les informations destinées aux différents spots. Ce point unique regroupe l'ensemble des équipements de modulation (qui dans la première architecture sont répartis dans les stations terrestres) et génère un signal radio (réparti en plusieurs porteuses) qui est numérisé et dispatché à l'ensemble des stations terrestres au travers de liaisons sur fibres optiques.

Pour les systèmes à grande capacité (par exemple plus de cent spots), les deux architectures connues sont inapplicables (ou difficilement applicables) en pratique. En effet, cela conduirait à des hypothèses de transferts d'information prohibitifs (en termes de débit d'information, synchronisation, etc.) entre stations terrestres (cas de la première architecture) ou entre le point unique et les stations terrestres (cas de la deuxième architecture).

### 3. OBJECTIFS

L'invention, dans au moins un mode de réalisation, a notamment pour objectif de pallier ces différents inconvénients de l'état de la technique.

Plus précisément, dans au moins un mode de réalisation de l'invention, un objectif est de fournir une solution permettant de mettre en œuvre des algorithmes d'annulation d'interférences intra-systèmes, dans un système de télécommunication via un dispositif relais, de type satellite ou aéronef, à couverture géographique multi-spots, avec un schéma de réutilisation à N couleurs.

Au moins un mode de réalisation de l'invention a également pour objectif de fournir une solution permettant la mise en œuvre des algorithmes d'annulation d'interférences intra-systèmes tout en évitant une perte totale de spot même en cas d'indisponibilité d'une station terrestre.

Un autre objectif d'au moins un mode de réalisation de l'invention est de fournir une telle solution permettant la mise en œuvre des algorithmes d'annulation d'interférences intra-systèmes tout en offrant un même service sur la totalité de la zone de couverture géographique terrestre (c'est-à-dire l'ensemble des spots), la capacité de ce service pouvant éventuellement s'étendre graduellement si nécessaire.

Un objectif complémentaire d'au moins un mode de réalisation de l'invention est de fournir une telle solution qui soit facile à mettre en œuvre et peu coûteuse, tant côté stations terrestres que côté dispositif relais (de type satellite ou aéronef).

### 4. RÉSUMÉ

Dans une première mise en œuvre particulière de l'invention, il est proposé un procédé selon la revendication 1.

Dans une deuxième mise en œuvre particulière de l'invention, il est proposé un procédé selon la revendication 2.

Ainsi, ces première et deuxième mises en œuvre particulière de l'invention reposent sur une approche tout à fait nouvelle et inventive consistant à faire transmettre par une même station terrestre des informations pouvant générer des interférences intra-systèmes du fait qu'elles vont être retransmises par le dispositif relais (de type satellite ou aéronef) avec une même couleur (revendication 1) ou une même sous-couleur (revendication 2). Cette station terrestre peut alors appliquer, pour ces informations, les algorithmes d'annulation d'interférences intra-systèmes, sans qu'il soit nécessaire d'établir un lien de communication entre cette station terrestre et les autres stations terrestres (cas de la première architecture connue), ou bien entre cette station terrestre et un point unique (cas de la deuxième architecture connue). En d'autres termes, la solution proposée permet la mise en œuvre des algorithmes d'annulation d'interférences intra-systèmes, tout en évitant des transferts d'information entre stations terrestres, via le réseau terrestre.

La première mise en œuvre ne nécessite que N stations terrestres. Elle est adaptée au cas où chacune de ces N stations terrestres possède la capacité d'acheminer toutes les informations d'une des N couleurs.

Tout en permettant la mise en œuvre des algorithmes d'annulation d'interférences intra-systèmes, la deuxième mise en œuvre permet de s'affranchir de la limité précitée de la première mise en œuvre. En effet, si une station terrestre ne possède pas la capacité d'acheminer toutes les informations d'une des N couleurs, alors cette couleur est divisée en M sous-couleurs et cette station terrestre est remplacée par M stations terrestres possédant chacune la capacité d'acheminer toutes les informations d'une des M sous-couleurs.

Un autre avantage de cette deuxième mise en œuvre est qu'elle évite une perte totale de couverture dans les spots associés à une couleur divisée en plusieurs sous-couleurs. En effet, même en cas d'indisponibilité d'une station terrestre transmettant au dispositif relais (de type satellite ou aéronef) les informations d'une des sous-couleurs de la couleur divisée, la solution proposée permet une couverture partielle de ce spot, puisqu'il reçoit les informations des autres sous-couleurs de la couleur divisée (transmises par des stations terrestres autres que celle indisponible).

Selon un aspect particulier de cette deuxième mise en œuvre, chacune de S stations terrestres est dédiée à une sous-couleur spécifique parmi S sous-couleurs et transmet au dispositif relais toutes les informations destinées à être transmises par le dispositif relais avec ladite sous-couleur spécifique, où S=M₁+M₂+...+M_{N}, avec *Mᵢ* le nombre de sous-couleurs de la i^{ème} des N couleurs, *i* ∈ {1 ... *N*}*.*

Dans ce cas particulier de la deuxième mise en œuvre, chacune des N couleurs est divisée en sous-couleurs et le nombre S de stations terrestres correspond au nombre total de sous-couleurs résultant de la division des N couleurs.

Selon une caractéristique particulière, les N couleurs comprennent chacune M sous-couleurs.

En d'autres termes, le nombre de sous-couleurs formant une couleur est identique pour toutes les couleurs. Ceci permet d'obtenir d'une part une architecture système équilibrée entre les différentes stations terrestres et d'autre part un débit (quantité d'informations transmises) équilibré entre les différents spots.

Dans une variante, le nombre de sous-couleurs formant une couleur est différent d'une couleur à l'autre. Cette variante est adaptée au cas où la quantité d'informations transmises par le dispositif relais (de type satellite ou aéronef) est variable d'une couleur à l'autre (une couleur à plus fort débit étant alors divisée en un plus grand nombre de sous-couleurs).

Dans une variante, au moins une couleur n'est pas divisée (une des stations terrestres possède la capacité d'acheminer toutes les informations de cette couleur) et au moins une couleur est divisée en sous-couleurs.

Dans une troisième mise en œuvre particulière, pour au moins deux sous-couleurs résultant chacune d'une division d'une couleur distincte parmi les N couleurs, une des stations terrestres transmet au dispositif relais toutes les informations destinées à être transmises par le dispositif relais avec lesdites au moins deux sous-couleurs.

Tout en permettant la mise en œuvre des algorithmes d'annulation d'interférences intra-systèmes, cette troisième mise en œuvre offre un même service sur les spots couverts avec lesdites au moins deux sous-couleurs.

Selon un aspect particulier de cette troisième mise en œuvre, les N couleurs comprennent chacune M' sous-couleurs, et chacune de M' stations terrestres est dédiée à une j^{ème} sous-couleur spécifique de chacune des N couleurs,*j* ∈ {1 ... *M'*}, et transmet au dispositif relais toutes les informations destinées à être transmises par le dispositif relais avec les N j^{èmes} sous-couleurs spécifiques des N couleurs.

Dans ce cas particulier de la troisième mise en œuvre, un même service est offert sur la totalité de la zone de couverture géographique terrestre (c'est-à-dire l'ensemble des spots). On évite, dans tous les spots, une perte totale de couverture. En effet, en cas d'indisponibilité d'une des stations terrestres, la solution proposée permet une couverture partielle de tous les spots, puisqu'ils reçoivent chacun des informations transmises par les stations terrestres autres que celle indisponible. En outre, la capacité de ce service peut s'étendre graduellement, en augmentant au fur et à mesure des besoins le nombre de stations terrestres en opération.

Dans un autre mode de réalisation de l'invention, il est proposé une station terrestre d'un système de télécommunication à couverture géographique multi-spots et comprenant une voie aller pour transmettre des informations, via un dispositif relais de type satellite ou aéronef, depuis une pluralité de stations terrestres vers une pluralité de terminaux localisés dans des spots répartis dans une zone de couverture géographique terrestre, la voie aller comprenant une pluralité de liaisons montantes, chacune depuis une des stations terrestres vers le dispositif relais, et une pluralité de liaisons descendantes, chacune depuis le dispositif relais vers un des spots, chacune des liaisons descendantes étant associée à une couleur dans un schéma de réutilisation à N couleurs, avec N≥2, chaque couleur correspondant à une bande de fréquence distincte ou à un couple distinct associant une bande de fréquence et une polarisation. Ladite station terrestre comprend des moyens de transmission au dispositif relais de toutes les informations destinées à être transmises par le dispositif relais avec au moins une couleur donnée parmi les N couleurs ou avec au moins une sous-couleur donnée d'au moins une couleur donnée, ladite au moins une sous-couleur donnée étant une de M sous-couleurs résultant d'une division de la couleur donnée et associées chacune à une sous-bande de la bande de fréquence associée à la couleur donnée ou à un couple distinct associant une sous-bande de la bande de fréquence associée à la couleur donnée et la polarisation associée à la couleur donnée, chaque liaison descendante associée à ladite au moins une couleur donnée utilisant les M sous-couleurs, avec M≥2.

Dans un autre mode de réalisation de l'invention, il est proposé un dispositif relais, de type satellite ou aéronef, d'un système de télécommunication à couverture géographique multi-spots et comprenant une voie aller pour transmettre des informations, via ledit dispositif relais, depuis une pluralité de stations terrestres vers une pluralité de terminaux localisés dans des spots répartis dans une zone de couverture géographique terrestre, la voie aller comprenant une pluralité de liaisons montantes, chacune depuis une des stations terrestres vers ledit dispositif relais, et une pluralité de liaisons descendantes, chacune depuis ledit dispositif relais vers un des spots, chacune des liaisons descendantes étant associée à une couleur dans un schéma de réutilisation à N couleurs, avec N≥2, chaque couleur correspondant à une bande de fréquence distincte ou à un couple distinct associant une bande de fréquence et une polarisation. Ledit dispositif relais comprend des moyens de réception, sur une des liaisons montantes, de toutes les informations destinées à être transmises avec au moins une couleur donnée parmi les N couleurs ou avec au moins une sous-couleur donnée d'au moins une couleur donnée, ladite au moins une sous-couleur donnée étant une de M sous-couleurs résultant d'une division de la couleur donnée et associées chacune à une sous-bande de la bande de fréquence associée à la couleur donnée ou à un couple distinct associant une sous-bande de la bande de fréquence associée à la couleur donnée et la polarisation associée à la couleur donnée, chaque liaison descendante associée à ladite au moins une couleur donnée utilisant les M sous-couleurs, avec M≥2.

Avantageusement, la station terrestre et le dispositif relais comprennent des moyens de mise en œuvre des étapes qu'ils effectuent dans le procédé tel que décrit précédemment, dans l'une quelconque de ses différentes implémentations.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, illustre un exemple de système de télécommunication satellitaire à couverture géographique multi-spots ;
- la figure 2A, déjà décrite en relation avec l'art antérieur, illustre le déploiement sur la zone Europe du système multi-spots de la figure 1 ;
- la figure 2B, déjà décrite en relation avec l'art antérieur, illustre un exemple de maillage entre onze stations terrestres ;
- la figure 3, déjà décrite en relation avec l'art antérieur, illustre un exemple de transmission d'informations depuis une pluralité de stations terrestres vers une pluralité de spots, via un satellite, selon une première solution connue ;
- la figure 4 illustre un exemple de transmission d'informations depuis une pluralité de stations terrestres vers une pluralité de spots, via un satellite, selon un premier mode de réalisation de l'invention (à comparer avec la première solution connue de la figure 3) ;
- la figure 5A illustre un exemple de transmission d'informations depuis une pluralité de stations terrestres vers une pluralité de spots, via un satellite, selon un deuxième mode de réalisation de l'invention (à comparer avec la deuxième solution connue de la figure 6) ;
- la figure 5B présente un exemple d'architecture de la charge utile du satellite de la figure 5A ;
- la figure 6 illustre un exemple de transmission d'informations depuis une pluralité de stations terrestres vers une pluralité de spots, via un satellite, selon une deuxième solution connue ;
- la figure 7A illustre un exemple de transmission d'informations depuis une pluralité de stations terrestres vers une pluralité de spots, via un satellite, selon un troisième mode de réalisation de l'invention ; et
- la figure 7B présente un exemple d'architecture de la charge utile du satellite de la figure 7A.

### 6. DESCRIPTION DÉTAILLÉE

Sur toutes les figures du présent document, les éléments identiques sont désignés par une même référence numérique.

Dans la suite de la description, on présente à titre illustratif, et non limitatif, plusieurs modes de réalisation de l'invention, dans le cas où le dispositif relais est un satellite. Il est clair que la présente invention n'est pas limitée à ce type de dispositif relais et s'applique également quand le dispositif relais est un aéronef (avion, drone, dirigeable, ballon, etc.), par exemple une plateforme de haute altitude (HAPS).

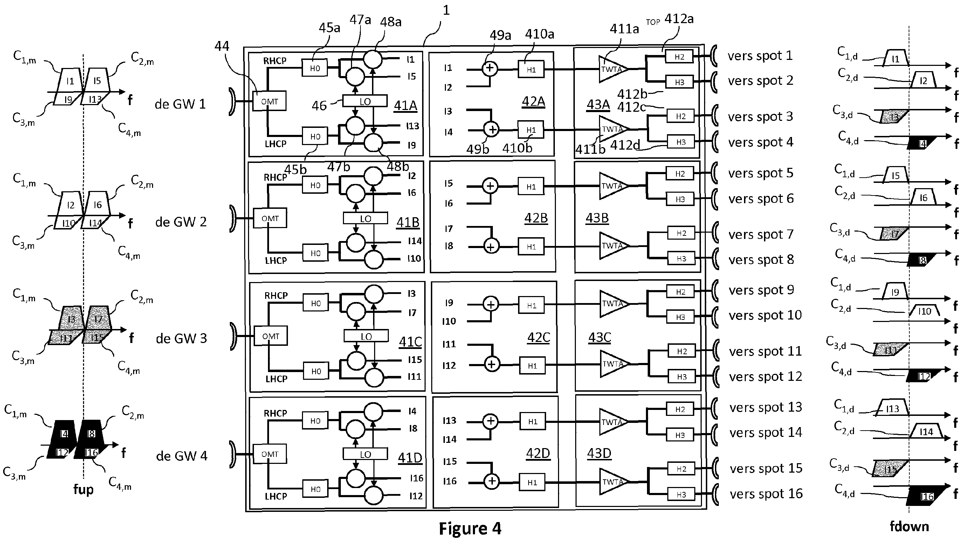

On présente maintenant, en relation avec la **figure 4****,** un exemple de transmission d'informations depuis quatre stations terrestres GW1 à GW4 vers seize spots (spot 1 à spot 16), via un satellite 1, selon un premier mode de réalisation de l'invention (à comparer avec la première solution connue de la **figure 3****).**

La station terrestre GW1 transmet au satellite les informations I1, I5, I9 et I13, sur les premières couleurs C_{1,m}, C_{2.m}, C_{3,m} et C_{4,m} respectivement (cf. définitions plus haut). La station terrestre GW2 transmet au satellite les informations I2, I6, I10 et I14, sur les mêmes premières couleurs C_{1,m}, C_{2.m}, C_{3,m} et C_{4,m} respectivement. La station terrestre GW3 transmet au satellite les informations I3, I7, I11 et I15, sur les mêmes premières couleurs C_{1,m}, C_{2.m}, C_{3,m} et C_{4,m} respectivement. La station terrestre GW4 transmet au satellite les informations I4, I8, I12 et I16, sur les mêmes premières couleurs C_{1,m}, C_{2.m}, C_{3,m} et C_{4,m} respectivement.

Le satellite retransmet les informations I1, I5, I9 et I13 vers les spots 1, 5, 9 et 13 respectivement, sur la couleur C_{1,d} (cf. définitions plus haut). Il retransmet les informations I2, I6, I10 et I14 vers les spots 2, 6, 10 et 14 respectivement, sur la couleur C_{2,d} (cf. définitions plus haut). Il retransmet les informations I3, I7, I11 et I15 vers les spots 3, 7, 11 et 15 respectivement, sur la couleur C₃,_{d} (cf. définitions plus haut). Il retransmet les informations I4,I8,I12 et I16 vers les spots 4, 8, 12 et 16 respectivement, sur la couleur C_{4,d} (cf. définitions plus haut).

Chacune des quatre stations terrestres GW1 à GW4 est donc dédiée à une couleur spécifique parmi les quatre couleurs C_{1,d}, C_{2,d}, C₃,_{d} et C_{4,d} et transmet au satellite 1 toutes les informations destinées à être transmises par le satellite avec cette couleur spécifique. L'utilisation des algorithmes d'annulation d'interférences ne nécessite donc aucune infrastructure sol (réseau de communication entre les stations terrestres), pour acheminer les informations des stations terrestres interférentes ainsi que les paramètres de correction à appliquer pour corriger les interférences.

La **figure 4** présente un exemple (illustratif et non limitatif) d'architecture de la charge utile du satellite 1, comprenant quatre blocs d'entrée 41A à 41D, suivis de quatre blocs intermédiaires 42A à 42D, puis quatre blocs de sortie 43A à 43D.

Les blocs précités, et décrits en détail dans la suite de la description, sont des blocs fonctionnels, dont les fonctions peuvent être réalisées indifféremment sous une forme matérielle (« hardware ») et/ou sous une forme logicielle (« software »), par exemple par du traitement du signal ou du logiciel dans un processeur de signal numérique transparent (PNT).

En pratique et de manière classique, ces blocs coopèrent avec un bloc de réglage du niveau relatif des densités spectrales de puissance des diverses stations terrestres. Ce bloc de réglage (non représenté sur la **figure 4****)** est soit à bord (c'est-à-dire dans la charge utile du satellite) soit au sol (c'est-à-dire dans un équipement terrestre).

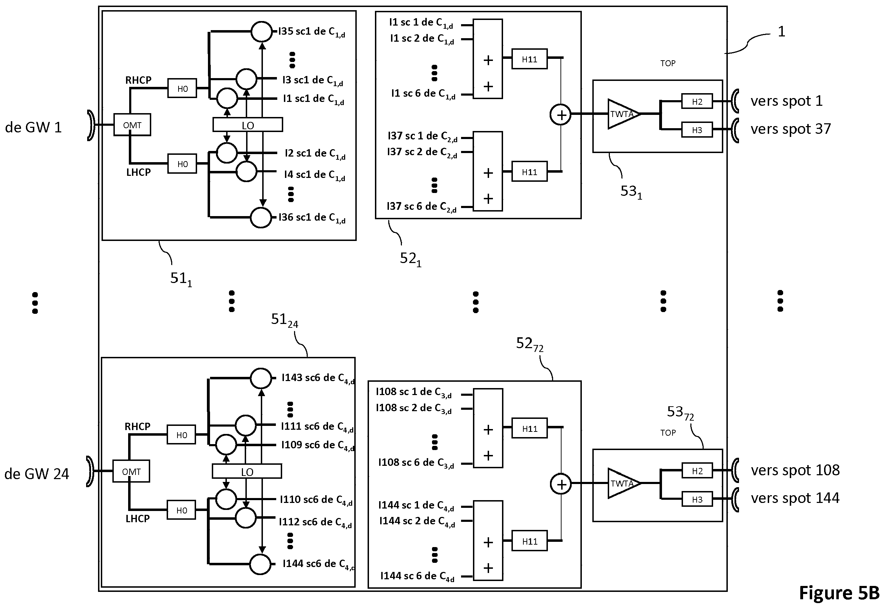

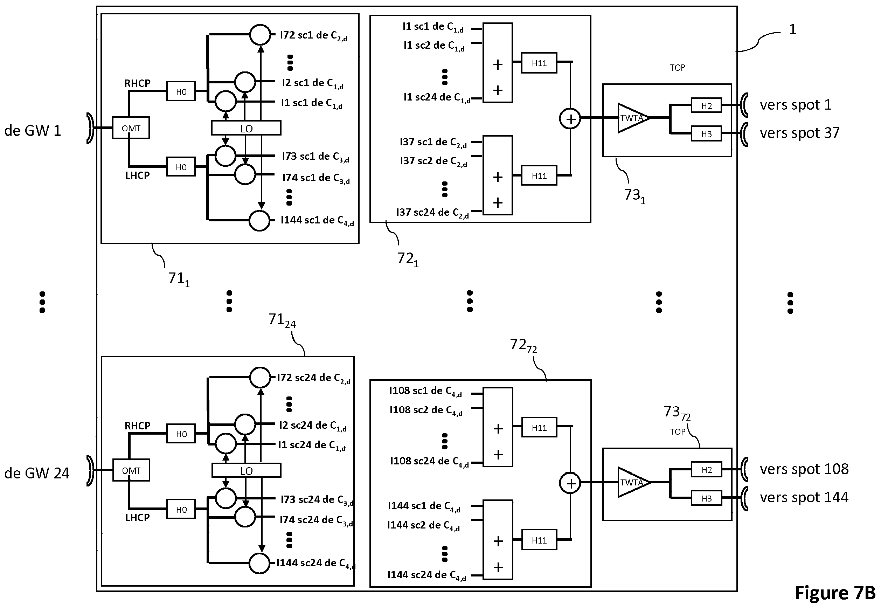

Ces remarques (relatives aux blocs fonctionnels coopérant avec un bloc de réglage) s'appliquent également aux blocs des **figures 5B** **et** **7B** décrits par la suite.

Chacun des blocs d'entrée 41A à 41D reçoit les signaux provenant d'une des stations terrestres. On détaille maintenant le bloc d'entrée 41A qui reçoit les informations I1, I5, I9 et I13 transmises par la station terrestre GW1. Il comprend un duplexeur de polarisation (OMT) 44, permettant de séparer les signaux selon leur polarisation (polarisation circulaire droite (RHCP) ou gauche (LHCP)), et deux branches dédiées chacune à une polarisation distincte. Chaque branche du bloc 41A comprend un premier filtre (H0) 45a, 45b, suivi de deux transposeurs de fréquence 47a, 48a et 47b, 48b en parallèle :
- l'un (48a, 48b) effectue une première transposition du spectre reçu, de la fréquence fᵤₚ vers la fréquence f_{down} (par multiplication par une première fréquence fournie par un oscillateur local (LO) 35). Avec cette première transposition, la bande de fréquence de la couleur C_{1,m} (transportant l'information I1) est transposée en une bande de fréquence de la couleur C_{1,d} (transportant la même information I1). De même, la bande de fréquence de la couleur C_{3,m} (transportant l'information I9) est transposée en une bande de fréquence de la couleur C_{1,d} (transportant la même information I9) ;
- l'autre (47a, 47b) effectue une deuxième transposition du spectre reçu, légèrement décalée par rapport à la première transposition (par multiplication par une deuxième fréquence fournie par l'oscillateur local (LO) 35). Avec cette deuxième transposition, la bande de fréquence de la couleur C_{2,m} (transportant l'information I5) est transposée en une bande de fréquence de la couleur C_{1,d} (transportant la même information I5). De même, la bande de fréquence de la couleur C_{4,m} (transportant l'information I13) est transposée en une bande de fréquence de la couleur C_{1,d} (transportant la même information I13).

Chacun des blocs intermédiaires 42A à 42D reçoit des signaux d'informations provenant des quatre blocs d'entrée 41A à 41D. On détaille maintenant le bloc intermédiaire 42A qui reçoit les signaux d'informations I1, I2, I3 et I4. Il comprend deux branches comprenant chacune un additionneur 49a, 49b (combinant deux des quatre signaux d'informations reçus) suivi d'un second filtre (H1) 410a, 410b. Ainsi, les signaux correspondant aux informations I1 et I2 sont combinés, et en parallèle les signaux correspondant aux informations I3 et I4 sont combinés.

Chacun des blocs de sortie 43A à 43D est identique à l'un des blocs 32A à 32D de la **figure 3****,** et reçoit les deux signaux sortant d'un des quatre blocs intermédiaires 42A à 42D. On détaille maintenant le bloc de sortie 43A qui reçoit les signaux sortant du bloc intermédiaire 42A. Il comprend deux branches comprenant chacune un amplificateur (TWTA) 411a, 411b (recevant le signal de sortie du second filtre de l'une des deux branches du bloc 42A), dont la sortie alimente deux filtres (H2) 412a, 412c et (H3) 412b, 412d disposés en parallèle et permettant de découper le signal en deux sous-bandes, correspondant aux couleurs C_{1,d} et C_{2,d} pour la polarisation circulaire droite (couleurs utilisées pour l'émission vers les spots 1 et 2) et aux couleurs C₃,_{d} et C_{4,d} pour la polarisation circulaire gauche (couleurs utilisées pour l'émission vers les spots 3 et 4).

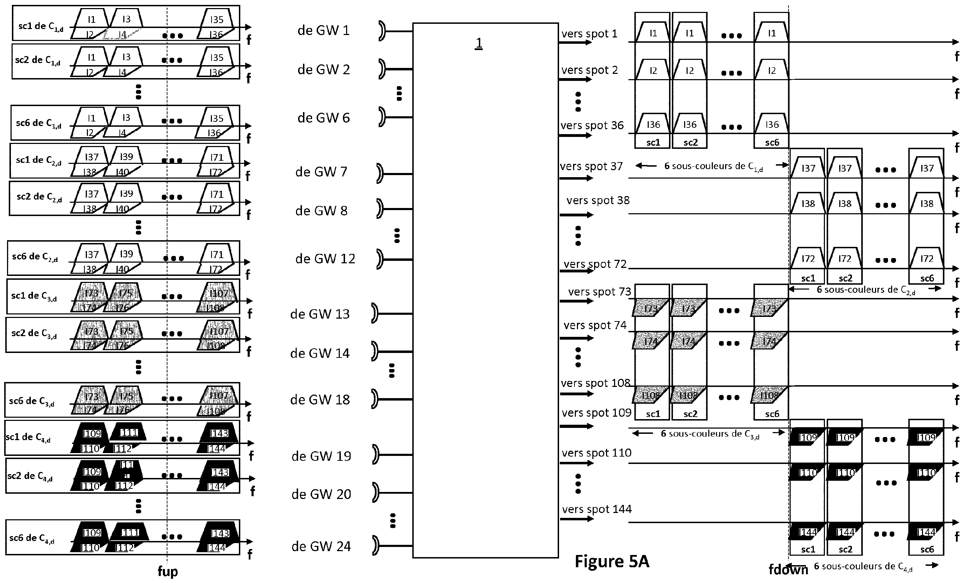

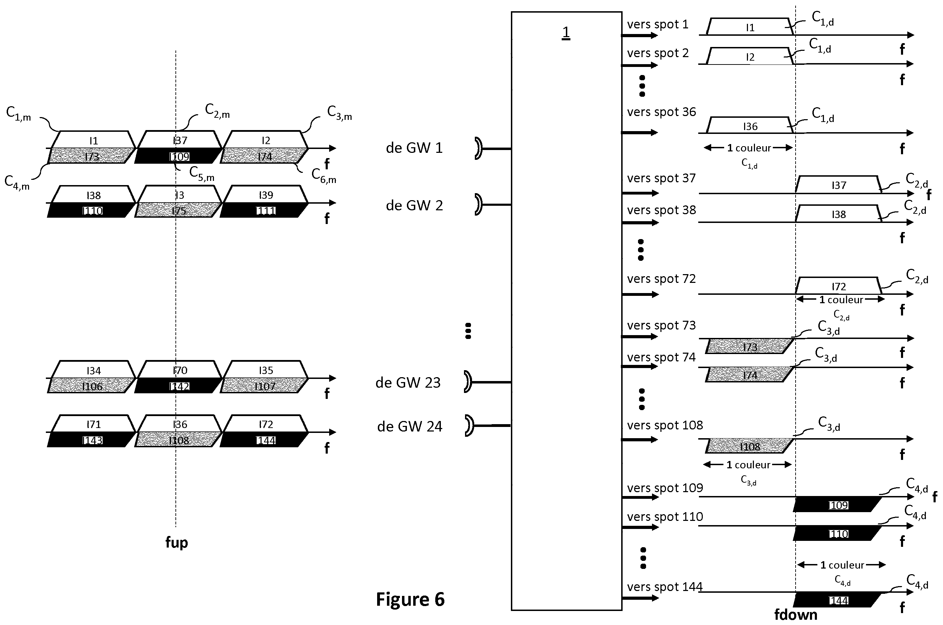

On présente maintenant, en relation avec la **figure 5A****,** un exemple de transmission d'informations depuis 24 stations terrestres GW1 à GW24 vers 144 spots (spot 1 à spot 144), via un satellite 1, selon un deuxième mode de réalisation de l'invention (à comparer avec la deuxième solution connue de la **figure 6****,** discutée ci-après).

Dans ce deuxième mode de réalisation, chacune des quatre couleurs C_{1,d} à C_{4,d} est divisée en 6 sous-couleurs (notée sc1 à sc6). Il y a donc 24 sous-couleurs au total. Chacune des 24 stations terrestres est dédiée à une sous-couleur spécifique parmi ces 24 sous-couleurs et transmet au satellite toutes les informations destinées à être transmises par le satellite avec cette sous-couleur spécifique. Ainsi, les algorithmes d'annulation d'interférence (par soustraction à la source) peuvent être appliqués sans aucune nécessité d'un lien réseau entre les stations terrestres.

Par exemple, pour les six couleurs sc1 à sc6 de la couleur C_{1,d}:
- la station terrestre GW1 transmet au satellite une première partie des informations I1 à I36, destinées à être retransmises par le satellite, vers les spots 1 à 36 respectivement, avec la sous-couleur sc1 de C_{1,d} ;
- la station terrestre GW2 transmet au satellite une deuxième partie des informations I1 à I36, destinées à être retransmises par le satellite, vers les spots 1 à 36 respectivement, avec la sous-couleur sc2 de C_{1,d} ;
- ... ;
- la station terrestre GW6 transmet au satellite une sixième partie des informations I1 à I36, destinées à être retransmises par le satellite, vers les spots 1 à 36 respectivement, avec la sous-couleur sc6 de C_{1,d}.

De même, chacune des six stations terrestres GW7 à GW12 transmet au satellite une partie distincte des informations I37 à I72, destinées à être retransmises par le satellite, vers les spots 37 à 72 respectivement, avec l'une des sous-couleurs sc1 à sc6 de C_{2,d}. Chacune des six stations terrestres GW13 à GW18 transmet au satellite une partie distincte des informations I73 à I108, destinées à être retransmises par le satellite, vers les spots 73 à 108 respectivement, avec l'une des sous-couleurs sc1 à sc6 de C_{3,d}. Chacune des six stations terrestres GW19 à GW24 transmet au satellite une partie distincte des informations I109 à I144, destinées à être retransmises par le satellite, vers les spots 109 à 144 respectivement, avec l'une des sous-couleurs sc1 à sc6 de C_{4,d}.

Un autre intérêt de la solution de la **figure 5A** est la couverture partielle de l'ensemble des spots de même couleur, en cas d'indisponibilité d'une des stations terrestres alimentant ces spots en informations. Par exemple, en cas d'indisponibilité de la station terrestre GW1, les spots 1 à 36 sont partiellement couverts avec les parties d'informations transmises sur les sous-couleurs sc2 à sc6 de C_{1,d} (ne manquent donc que les parties d'informations transmises sur la sous-couleur sc1 de C_{1,d}). Il n'y a donc perte que d'un sixième de la capacité des spots 1 à 36 (aucune perte totale de ces spots).

La **figure 5B** présente un exemple d'architecture de la charge utile du satellite 1 de la **figure 5A****,** comprenant 24 blocs d'entrée 51₁ à 51₂₄, suivis de 72 blocs intermédiaires 52₁ à 52₇₂, puis 72 blocs de sortie 53₁ à 53₇₂.

Chacun des 24 blocs d'entrée 51₁ à 51₂₄ reçoit les signaux provenant d'une des stations terrestres. On détaille maintenant le bloc d'entrée 51₁ qui reçoit (en provenance de la station terrestre GW1) une première partie des informations I1 à I36, destinées à être retransmises par le satellite, vers les spots 1 à 36 respectivement, avec la sous-couleur sc1 de C₁,_{d}. Le bloc d'entrée 51₁ comprend un duplexeur de polarisation (OMT), permettant de séparer les signaux selon leur polarisation (polarisation circulaire droite (RHCP) ou gauche (LHCP)), et deux branches dédiées chacune à une polarisation distincte. Chaque branche du bloc d'entrée 51₁ comprend un premier filtre (H0), suivi de 18 transposeurs de fréquence en parallèle. Chacun des 36 transposeurs (18 par branche) effectue une transposition de la fréquence fᵤₚ vers une fréquence particulière de sorte qu'une partie de chacune des informations I1 à 136 (partie provenant de la station terrestre GW1) est transposée dans la bande de fréquence de la sous-couleur sc1 de la couleur C_{1,d}. Le fonctionnement des autres blocs entrée 51₂ à 51₂₄ peut aisément être déduit de celui du bloc d'entrée 51₁,

Chacun des 72 blocs intermédiaires 52₁ à 52₇₂ reçoit des signaux d'informations provenant de certains des blocs d'entrée. On détaille maintenant le bloc intermédiaire 52₁ qui reçoit : sur une première branche, les six parties de l'information I1 qui ont préalablement été transposées dans les bandes de fréquence des six sous-couleurs sc1 à sc6 de la couleur C_{1,d}, et sur une deuxième branche, les six parties de l'information I37 qui ont préalablement été transposées dans les bandes de fréquence des six sous-couleurs sc1 à sc6 de la couleur C_{2,d}. Le bloc intermédiaire 52₁ comprend, dans chacune de ses branches, un additionneur (combinant les six signaux d'informations reçus) suivi d'un second filtre (H11). Ainsi, les signaux correspondant aux six parties de l'information I1 sont combinés, et en parallèle les signaux correspondant aux six parties de l'information I37 sont combinés. Le bloc intermédiaire 52₁ comprend également un autre additionneur permettant d'additionner les signaux issus des deux branches, pour former le signal de sortie du bloc intermédiaire 52₁.

Chacun des 72 blocs de sortie 53₁ à 53₇₂ est identique à l'une des deux branches des blocs 32A à 32D de la **figure 3****,** et reçoit le signal sortant d'un des 72 blocs intermédiaires 52₁ à 52₇₂. On détaille maintenant le bloc de sortie 53₁ qui reçoit le signal sortant du bloc intermédiaire 52₁. Il comprend deux branches comprenant chacune un amplificateur (TWTA), dont la sortie alimente deux filtres (H2, H3) disposés en parallèle et permettant chacun de conserver la bande correspondant aux couleurs C_{1,d} et C_{2,d} respectivement (couleurs utilisées pour l'émission vers les spots 1 et 37).

La **figure 6** illustre un exemple de transmission d'informations depuis une pluralité de stations terrestres vers une pluralité de spots, via un satellite, selon une deuxième solution connue (à comparer avec la nouvelle solution de la **figure 5A****,** les deux solutions correspondant à un même nombre de station terrestre, un même nombre de spot et un même domaine de fréquences pour transmettre un même débit d'information).

Dans l'exemple de la **figure 6****,** on suppose que l'architecture de la charge utile du satellite 1 est équivalente à celle de l'exemple de la **figure 3** (première solution connue). La différence est que la charge utile du satellite reçoit d'une même station terrestre six informations (au lieu de quatre) et les retransmet vers six spots (au lieu de quatre).

La transmission d'informations depuis 24 stations terrestres GW1 à GW24 vers 144 spots (spot 1 à spot 144), via un satellite 1, est effectuée comme suit :
- la station terrestre GW1 transmet au satellite six informations I1, I37, I2, I73, I109 et 174 destinées à être retransmises par le satellite, vers les spots 1, 37, 2, 73, 109 et 74 respectivement, avec les couleurs C_{1,d}, C_{2,d}, C_{1,d}, C_{3,d}, C_{4,d} et C₃,_{d} ;
- la station terrestre GW2 transmet au satellite six informations I38, I3, I39, I110, I75 et I111 destinées à être retransmises par le satellite, vers les spots 38, 3, 39, 110,75 et 111 respectivement, avec les couleurs C_{2,d}, C_{1,d}, C_{2,d}, C_{4,d}, C₃,_{d} et C_{4,d} ;
- ... ;
- la station terrestre GW24 transmet au satellite six informations I71, I36, I72, I143, I108 et I144 destinées à être retransmises par le satellite, vers les spots 71, 36, 72, 143, 108 et 144 respectivement, avec les couleurs C_{2,d}, C_{1,d}, C_{2,d}, C_{4,d}, C_{3,d} et C_{4,d}.

On constate que les informations I1, I3, I34 et I36 par exemple, retransmises par le satellite avec la couleur C_{1,d} vers les spots 1, 3, 34, 36, sont émises par des stations terrestres différentes (GW1, GW2, GW23 et GW24 respectivement). La mise en œuvre des algorithmes d'annulation d'interférences nécessite donc dans ce cas un réseau de communication dédié entre les stations terrestres.

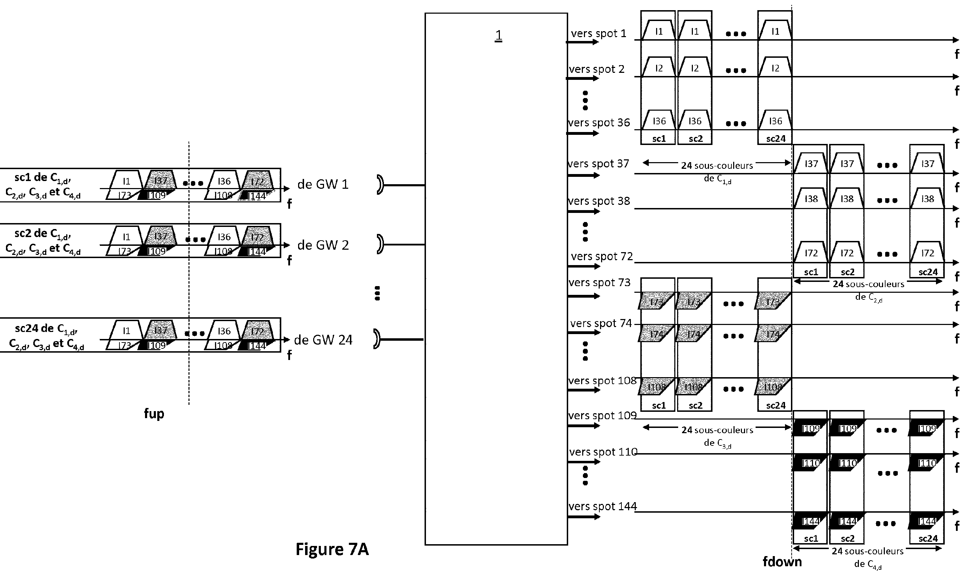

On présente maintenant, en relation avec la **figure 7A****,** un exemple de transmission d'informations depuis 24 stations terrestres GW1 à GW24 vers 144 spots (spot 1 à spot 144), via un satellite 1, selon un troisième mode de réalisation de l'invention.

Dans ce troisième mode de réalisation, chacune des quatre couleurs C_{1,d} à C_{4,d} est divisée en 24 sous-couleurs (notée sc1 à sc24). Il y a donc 96 sous-couleurs au total. Chacune des 24 stations terrestres est dédiée à une j^{ème} sous-couleur spécifique de chacune des quatre couleurs, *j* ∈ {1 ... 24}, et transmet au satellite toutes les informations destinées à être transmises par le satellite avec les quatre j^{èmes} sous-couleurs spécifiques des quatre couleurs.

Par exemple, la station terrestre GW1 transmet au satellite :
- une première partie des informations I1 à I36, destinées à être retransmises par le satellite, vers les spots 1 à 36 respectivement, avec la sous-couleur sc1 de C_{1,d} ;
- une première partie des informations I37 à I72, destinées à être retransmises par le satellite, vers les spots 37 à 72 respectivement, avec la sous-couleur sc1 de C_{2,d} ;
- une première partie des informations I73 à I108, destinées à être retransmises par le satellite, vers les spots 73 à 108 respectivement, avec la sous-couleur sc1 de C_{3,d} ; et
- une première partie des informations I109 à I144, destinées à être retransmises par le satellite, vers les spots 109 à 144 respectivement, avec la sous-couleur sc1 de C_{4,d}.

Ainsi, les algorithmes d'annulation d'interférence (par soustraction à la source) peuvent être appliqués sans aucune nécessité d'un lien réseau entre les stations terrestres .

Un autre intérêt de ce troisième mode de réalisation est qu'un même service est offert sur la totalité de la zone de couverture géographique terrestre (c'est-à-dire l'ensemble des spots). On évite, dans tous les spots, une perte totale de couverture. En effet, en cas d'indisponibilité d'une des stations terrestres, la solution proposée permet une couverture partielle de tous les spots, puisqu'ils reçoivent chacun des informations transmises par les stations terrestres autres que celle indisponible. Par exemple, en cas d'indisponibilité de la station terrestre GW1, tous les spots 1 à 144 sont partiellement couverts avec :
- les parties d'informations transmises sur les sous-couleurs sc2 à sc24 de C_{1,d} (ne manquent donc que les parties d'informations transmises sur la sous-couleur sc1 de C_{1,d}) pour les spots 1 à 36 ;
- les parties d'informations transmises sur les sous-couleurs sc2 à sc24 de C_{2,d} (ne manquent donc que les parties d'informations transmises sur la sous-couleur sc1 de C_{2,d}) pour les spots 37 à 72 ;
- les parties d'informations transmises sur les sous-couleurs sc2 à sc24 de C₃,_{d} (ne manquent donc que les parties d'informations transmises sur la sous-couleur sc1 de C_{3,d}) pour les spots 73 à 108 ;
- les parties d'informations transmises sur les sous-couleurs sc2 à sc24 de C_{4,d} (ne manquent donc que les parties d'informations transmises sur la sous-couleur sc1 de C_{4,d}) pour les spots 109 à 44.

En outre, la capacité de ce service peut s'étendre graduellement, en augmentant au fur et à mesure des besoins le nombre de stations terrestres en opération (par exemple, ajout d'une vingt-cinquième station terrestre si nécessaire).

La **figure 7B** présente un exemple d'architecture de la charge utile du satellite 1 de la **figure 7A****,** comprenant 24 blocs d'entrée 71₁ à 71₂₄, suivis de 72 blocs intermédiaires 72₁ à 72₇₂, puis 72 blocs de sortie 73₁ à 73₇₂.

Chacun des 24 blocs d'entrée 71₁ à 71₂₄ reçoit les signaux provenant d'une des stations terrestres. On détaille maintenant le bloc d'entrée 71₁ qui reçoit les signaux en provenance de la station terrestre GW1 (voir détail plus haut).

Le bloc d'entrée 71₁ comprend un duplexeur de polarisation (OMT), permettant de séparer les signaux selon leur polarisation (polarisation circulaire droite (RHCP) ou gauche (LHCP)), et deux branches dédiées chacune à une polarisation distincte. Chaque branche du bloc d'entrée 71₁ comprend un premier filtre (H0), suivi de 72 transposeurs de fréquence en parallèle. Chacun des 144 transposeurs (72 par branche) effectue une transposition de la fréquence fᵤₚ vers une fréquence particulière de sorte que :
- pour chacune des informations I1 à I36, la partie provenant de la station terrestre GW1 est transposée dans la bande de fréquence de la sous-couleur sc1 de la couleur C_{1,d};
- pour chacune des informations I37 à I72, la partie provenant de la station terrestre GW1 est transposée dans la bande de fréquence de la sous-couleur sc1 de la couleur C_{2,d} ;
- pour chacune des informations I73 à I108, la partie provenant de la station terrestre GW1 est transposée dans la bande de fréquence de la sous-couleur sc1 de la couleur C_{3,d} ;
- pour chacune des informations I109 à I144, la partie provenant de la station terrestre GW1 est transposée dans la bande de fréquence de la sous-couleur sc1 de la couleur C_{4,d}.

Le fonctionnement des autres blocs d'entrée 71₂ à 71₂₄ peut aisément être déduit de celui du bloc d'entrée 71₁.

Chacun des 72 blocs intermédiaires 72₁ à 72₇₂ reçoit des signaux d'informations provenant de certains des blocs d'entrée. On détaille maintenant le bloc intermédiaire 72₁ qui reçoit : sur une première branche, les 24 parties de l'information I1 qui ont préalablement été transposées dans les bandes de fréquence des 24 sous-couleurs sc1 à sc24 de la couleur C_{1,d}, et sur une deuxième branche, les 24 parties de l'information I37 qui ont préalablement été transposées dans les bandes de fréquence des 24 sous-couleurs sc1 à sc24 de la couleur C_{2,d}. Le bloc intermédiaire 72₁ comprend, dans chacune de ses branches, un additionneur (combinant les 24 signaux d'informations reçus) suivi d'un second filtre (H11). Ainsi, les signaux correspondant aux 24 parties de l'information I1 sont combinés, et en parallèle les signaux correspondant aux 24 parties de l'information I37 sont combinés. Le bloc intermédiaire 72₁ comprend également un autre additionneur permettant d'additionner les signaux issus des deux branches, pour former le signal de sortie du bloc intermédiaire 72₁.

Les 72 blocs de sortie 73₁ à 73₇₂ sont identiques aux 72 blocs de sortie 53₁ à 53₇₂ de la **figure 5****.** Chacun reçoit le signal sortant d'un des 72 blocs intermédiaires 72₁ à 72₇₂.

## Revendications

1. Procédé de télécommunication dans un système à couverture géographique multi-spots comprenant une voie aller pour transmettre des informations, via un dispositif relais de type satellite ou aéronef (1), depuis une pluralité de stations terrestres (GW1 à GW4, figure 4) vers une pluralité de terminaux (Ti à Tl) localisés dans des spots (spots 1 à spot 16) répartis dans une zone de couverture géographique terrestre, la voie aller comprenant une pluralité de liaisons montantes (2a), chacune depuis une des stations terrestres vers le dispositif relais, et une pluralité de liaisons descendantes (3a à 6a), chacune depuis le dispositif relais vers un des spots, chacune des liaisons descendantes étant associée à une couleur (C_{1,d} à C_{4,d}) dans un schéma de réutilisation à N couleurs, avec N≥2, chaque couleur correspondant à une bande de fréquence distincte ou à un couple distinct associant une bande de fréquence et une polarisation, **caractérisé en ce que** chacune de N stations terrestres est.
dédiée à une couleur spécifique parmi les N couleurs, et:
∗ obtient, sans établir un lien de communication avec les autres stations terrestres ni un lien de communication avec un point unique ayant connaissance de toutes les informations à transmettre sur les liaisons descendantes, la totalité des informations destinées à être transmises par le dispositif relais avec ladite couleur spécifique ;
∗ applique des algorithmes d'annulation d'interférences intra-systèmes à ladite totalité des informations destinées à être transmises par le dispositif relais avec ladite couleur spécifique ; et
∗ transmet au dispositif relais ladite totalité des informations destinées à être transmises par le dispositif relais avec ladite couleur spécifique.

2. Procédé de télécommunication dans un système à couverture géographique multi-spots comprenant une voie aller pour transmettre des informations, via un dispositif relais de type satellite ou aéronef (1), depuis une pluralité de stations terrestres (GW1 à GW24, figure 5A) vers une pluralité de terminaux (Ti à Tl) localisés dans des spots (spots 1 à spot 144) répartis dans une zone de couverture géographique terrestre, la voie aller comprenant une pluralité de liaisons montantes (2a), chacune depuis une des stations terrestres vers le dispositif relais, et une pluralité de liaisons descendantes (3a à 6a), chacune depuis le dispositif relais vers un des spots, chacune des liaisons descendantes étant associée à une couleur (C_{1,d} à C_{4,d}) dans un schéma de réutilisation à N couleurs, avec N≥2, chaque couleur correspondant à une bande de fréquence distincte ou à un couple distinct associant une bande de fréquence et une polarisation, **caractérisé en ce que** chacune de M stations terrestres est.
dédiée à une sous-couleur spécifique parmi M sous-couleurs (sc1 à sc6) résultant de la division d'une couleur donnée, les M sous-couleurs (sc1 à sc6 ; sc1 à sc24) étant associées chacune à une sous-bande de la bande de fréquence associée à la couleur donnée ou à un couple distinct associant une sous-bande de la bande de fréquence associée à la couleur donnée et la polarisation associée à la couleur donnée, chaque liaison descendante associée à ladite couleur donnée utilisant les M sous-couleurs, avec M≥2, et:
∗ obtient, sans établir un lien de communication avec les autres stations terrestres ni un lien de communication avec un point unique ayant connaissance de toutes les informations à transmettre sur les liaisons descendantes, la totalité des informations destinées à être transmises par le dispositif relais avec ladite sous-couleur spécifique ;
∗ applique des algorithmes d'annulation d'interférences intra-systèmes à ladite totalité des informations destinées à être transmises par le dispositif relais avec ladite sous-couleur spécifique ; et
∗ transmet au dispositif relais ladite totalité des informations destinées à être transmises par le dispositif relais avec ladite sous-couleur spécifique.

3. Procédé selon la revendication 2, **caractérisé en ce que** chacune de S stations terrestres (GW1 à GW24, figure 5A) est dédiée à une sous-couleur spécifique parmi S sous-couleurs et transmet au dispositif relais toutes les informations destinées à être transmises par le dispositif relais avec ladite sous-couleur spécifique, où S=M₁+M₂+...+M_{N}, avec *Mᵢ* le nombre de sous-couleurs de la i^{ème} des N couleurs, i E {1 *... N*}.

4. Procédé selon la revendication 3, **caractérisé en ce que** les N couleurs comprennent chacune M sous-couleurs.

5. Procédé selon la revendication 1, **caractérisé en ce que**, pour au moins deux sous-couleurs (sc1 à sc24) résultant chacune d'une division d'une couleur distincte parmi les N couleurs, une des stations terrestres (GW1 à GW24, figure 7A) transmet au dispositif relais toutes les informations destinées à être transmises par le dispositif relais avec lesdites au moins deux sous-couleurs.

6. Procédé selon la revendication 5, **caractérisé en ce que** les N couleurs comprennent chacune M' sous-couleurs (sc1 à sc24), et **en ce que** chacune de M' stations terrestres (GW1 à GW24, figure 7A) est dédiée à une j^{ème} sous-couleur spécifique de chacune des N couleurs, j ∈ {1 ... *M'*}*,* et transmet au dispositif relais toutes les informations destinées à être transmises par le dispositif relais avec les N j^{èmes} sous-couleurs spécifiques des N couleurs.

7. Station terrestre (GW1 à GW24) d'un système de télécommunication à couverture géographique multi-spots et comprenant une voie aller pour transmettre des informations, via un dispositif relais de type satellite ou aéronef, depuis une pluralité de stations terrestres vers une pluralité de terminaux localisés dans des spots répartis dans une zone de couverture géographique terrestre, la voie aller comprenant une pluralité de liaisons montantes, chacune depuis une des stations terrestres vers le dispositif relais, et une pluralité de liaisons descendantes, chacune depuis le dispositif relais vers un des spots, chacune des liaisons descendantes étant associée à une couleur dans un schéma de réutilisation à N couleurs, avec N≥2, chaque couleur correspondant à une bande de fréquence distincte ou à un couple distinct associant une bande de fréquence et une polarisation, ladite station terrestre étant **caractérisée en ce qu'**elle est :
- dédiée à une couleur spécifique parmi les N couleurs ; et
- configurée pour :
∗ obtenir, sans établir un lien de communication avec les autres stations terrestres ni un lien de communication avec un point unique ayant connaissance de toutes les informations à transmettre sur les liaisons descendantes, la totalité des informations destinées à être transmises par le dispositif relais avec ladite couleur spécifique ;
∗ appliquer des algorithmes d'annulation d'interférences intra-systèmes à ladite totalité des informations destinées à être transmises par le dispositif relais avec ladite couleur spécifique ; et
∗ transmettre au dispositif relais ladite totalité des informations destinées à être transmises par le dispositif relais avec ladite couleur spécifique.

8. Station terrestre (GW1 à GW24) d'un système de télécommunication à couverture géographique multi-spots et comprenant une voie aller pour transmettre des informations, via un dispositif relais de type satellite ou aéronef, depuis une pluralité de stations terrestres vers une pluralité de terminaux localisés dans des spots répartis dans une zone de couverture géographique terrestre, la voie aller comprenant une pluralité de liaisons montantes, chacune depuis une des stations terrestres vers le dispositif relais, et une pluralité de liaisons descendantes, chacune depuis le dispositif relais vers un des spots, chacune des liaisons descendantes étant associée à une couleur dans un schéma de réutilisation à N couleurs, avec N≥2, chaque couleur correspondant à une bande de fréquence distincte ou à un couple distinct associant une bande de fréquence et une polarisation, ladite station terrestre étant **caractérisée en ce qu'**elle est :
- dédiée à une sous-couleur spécifique parmi M sous-couleurs (sc1 à sc6) résultant de la division d'une couleur donnée, les M sous-couleurs (sc1 à sc6 ; sc1 à sc24) étant associées chacune à une sous-bande de la bande de fréquence associée à la couleur donnée ou à un couple distinct associant une sous-bande de la bande de fréquence associée à la couleur donnée et la polarisation associée à la couleur donnée, chaque liaison descendante associée à ladite couleur donnée utilisant les M sous-couleurs, avec M≥2 ; et
- configurée pour :
∗ obtenir, sans établir un lien de communication avec les autres stations terrestres ni un lien de communication avec un point unique ayant connaissance de toutes les informations à transmettre sur les liaisons descendantes, la totalité des informations destinées à être transmises par le dispositif relais avec ladite sous-couleur spécifique ;
∗ appliquer des algorithmes d'annulation d'interférences intra-systèmes à ladite totalité des informations destinées à être transmises par le dispositif relais avec ladite sous-couleur spécifique ; et
∗ transmettre au dispositif relais ladite totalité des informations destinées à être transmises par le dispositif relais avec ladite sous-couleur spécifique.

## Patentansprüche

1. Verfahren zur Telekommunikation in einem System mit geografischer Multi-Spot-Abdeckung, umfassend einen Hin-Weg zur Übertragung der Informationen über eine Relaisvorrichtung vom Typ Satellit oder Flugzeug (1) von einer Vielzahl terrestrischer Stationen (GW1 bis GW4, Figur 4) an eine Vielzahl von Endgeräten (Ti bis T1), die in Spots (Spot 1 bis Spot 16) lokalisiert sind, die in einer terrestrischen geografischen Abdeckungszone verteilt sind, wobei der Hin-Weg eine Vielzahl aufsteigender Verbindungen (2a) umfasst, jede von einer der terrestrischen Stationen zu der Relaisvorrichtung, und eine Vielzahl absteigender Verbindungen (3a bis 6a), jede von der Relaisvorrichtung zu einem der Spots, wobei jede der absteigenden Verbindungen einer Farbe (C_{1,d} bis C_{4,d}) in einem Wiederverwendungsschema mit N Farben zugeordnet ist, mit N≥2, wobei jede Farbe einem unterschiedlichen Frequenzband oder einem unterschiedlichen Paar entspricht, das ein Frequenzband und eine Polarisierung zuordnet, **dadurch gekennzeichnet, dass** jede von N terrestrischen Stationen einer spezifischen Farbe von den N Farben zugeordnet ist und:
* ohne eine Kommunikationsverbindung mit den anderen terrestrischen Stationen oder eine Kommunikationsverbindung mit einem einzigen Punkt herzustellen, der Kenntnis über alle Informationen hat, die über die absteigenden Verbindungen zu übertragen sind, die Gesamtheit der Informationen erhält, die zur Übertragung durch die Relaisvorrichtung mit der spezifischen Farbe bestimmt sind;
* auf die Gesamtheit der Informationen, die zur Übertragung durch die Relaisvorrichtung mit der spezifischen Farbe bestimmt sind, Algorithmen zum Annullieren von systeminternen Interferenzen anwendet, und
* an die Relaisvorrichtung die Gesamtheit der Informationen überträgt, die zur Übertragung durch die Relaisvorrichtung mit der spezifischen Farbe bestimmt sind.

2. Verfahren zur Telekommunikation in einem System mit geografischer Multi-Spot-Abdeckung, umfassend einen Hin-Weg zur Übertragung der Informationen über eine Relaisvorrichtung vom Typ Satellit oder Flugzeug (1) von einer Vielzahl terrestrischer Stationen (GW1 bis GW24, Figur 5A) an eine Vielzahl von Endgeräten (Ti bis T1), die in Spots (Spot 1 bis Spot 144) lokalisiert sind, die in einer terrestrischen geografischen Abdeckungszone verteilt sind, wobei der Hin-Weg eine Vielzahl aufsteigender Verbindungen (2a) umfasst, jede von einer der terrestrischen Stationen zu der Relaisvorrichtung, und eine Vielzahl absteigender Verbindungen (3a bis 6a), jede von der Relaisvorrichtung zu einem der Spots, wobei jede der absteigenden Verbindungen einer Farbe (C_{1,d} bis C_{4,d}) in einem Wiederverwendungsschema mit N Farben zugeordnet ist, mit N≥2, wobei jede Farbe einem unterschiedlichen Frequenzband oder einem unterschiedlichen Paar entspricht, das ein Frequenzband und eine Polarisierung zuordnet, **dadurch gekennzeichnet, dass** jede von M terrestrischen Stationen einer spezifischen Sub-Farbe von M Sub-Farben (sc1 bis sc6) zugeordnet ist, die aus der Teilung einer bestimmten Farbe resultiert, wobei die M Sub-Farben (sc1 bis sc6; sc1 bis sc24) jeweils einem Sub-Band des Frequenzbands zugeordnet sind, das der bestimmten Farbe oder einem unterschiedlichen Paar zugeordnet ist, das ein Sub-Band des Frequenzbands, das der bestimmten Farbe zugeordnet ist, und die Polarisierung, die der bestimmten Farbe zugeordnet ist, zuordnet, wobei jede absteigende Verbindung, die der bestimmten Farbe zugeordnet ist, die M Sub-Farben verwendet, mit M≥2, und:
* ohne eine Kommunikationsverbindung mit den anderen terrestrischen Stationen oder eine Kommunikationsverbindung mit einem einzigen Punkt herzustellen, der Kenntnis über alle Informationen hat, die über die absteigenden Verbindungen zu übertragen sind, die Gesamtheit der Informationen erhält, die zur Übertragung durch die Relaisvorrichtung mit der spezifischen Sub-Farbe bestimmt sind;
* auf die Gesamtheit der Informationen, die zur Übertragung durch die Relaisvorrichtung mit der spezifischen Sub-Farbe bestimmt sind, Algorithmen zum Annullieren von systeminternen Interferenzen anwendet, und
* an die Relaisvorrichtung die Gesamtheit der Informationen überträgt, die zur Übertragung durch die Relaisvorrichtung mit der spezifischen Sub-Farbe bestimmt sind.

3. Verfahren nach Anspruch 2, **dadurch gekennzeichnet, dass** jede von S terrestrischen Stationen (GW1 bis GW24, Figur 5A) einer spezifischen Sub-Farbe von S Sub-Farben zugeordnet ist und an die Relaisvorrichtung alle Informationen überträgt, die zur Übertragung durch die Relaisvorrichtung mit der spezifischen Sub-Farbe bestimmt sind, wobei S=M₁+M₂+ ... +M_{N}, mit *Mi* als Anzahl der Sub-Farben der i-ten der N Farben, *i* ∈ {1 ... *N*}.

4. Verfahren nach Anspruch 3, **dadurch gekennzeichnet, dass** die N Farben jeweils M Sub-Farben umfassen.

5. Verfahren nach Anspruch 1, **dadurch gekennzeichnet, dass** für mindestens zwei Sub-Farben (sc1 bis sc24), die jeweils aus einer Teilung einer unterschiedlichen Farbe von den N Farben resultieren, eine der terrestrischen Stationen (GW1 bis GW24, Figur 7A) an die Relaisvorrichtung alle Informationen überträgt, die zur Übertragung durch die Relaisvorrichtung mit den mindestens zwei Sub-Farben bestimmt sind.

6. Verfahren nach Anspruch 5, **dadurch gekennzeichnet, dass** die N Farben jeweils M' Sub-Farben (sc1 bis sc24) umfassen und dass jede von M' terrestrischen Stationen (GW1 bis GW24, Figur 7A) einer spezifischen j-ten Sub-Farbe von jeder der N Farben zugeordnet ist, *j* ∈ {1 ... *M'*}*,* und an die Relaisvorrichtung alle Informationen überträgt, die zur Übertragung durch die Relaisvorrichtung mit den N spezifischen j-ten Sub-Farben bestimmt sind.

7. Terrestrische Station (GW1 bis GW24) eines Telekommunikationssystems mit geografischer Multi-Spot-Abdeckung, umfassend einen Hin-Weg zur Übertragung der Informationen über eine Relaisvorrichtung vom Typ Satellit oder Flugzeug von einer Vielzahl terrestrischer Stationen an eine Vielzahl von Endgeräten, die in Spots lokalisiert sind, die in einer terrestrischen geografischen Abdeckungszone verteilt sind, wobei der Hin-Weg eine Vielzahl aufsteigender Verbindungen umfasst, jede von einer der terrestrischen Stationen zu der Relaisvorrichtung, und eine Vielzahl absteigender Verbindungen, jede von der Relaisvorrichtung zu einem der Spots, wobei jede der absteigenden Verbindungen einer Farbe in einem Wiederverwendungsschema mit N Farben zugeordnet ist, mit N≥2, wobei jede Farbe einem unterschiedlichen Frequenzband oder einem unterschiedlichen Paar entspricht, das ein Frequenzband und eine Polarisierung zuordnet, wobei die terrestrische Station **dadurch gekennzeichnet, dass** sie:
- einer spezifischen Farbe von den N Farben zugeordnet ist; und
- ausgelegt ist, um
* ohne eine Kommunikationsverbindung mit den anderen terrestrischen Stationen oder eine Kommunikationsverbindung mit einem einzigen Punkt herzustellen, der Kenntnis über alle Informationen hat, die über die absteigenden Verbindungen zu übertragen sind, die Gesamtheit der Informationen zu erhalten, die zur Übertragung durch die Relaisvorrichtung mit der spezifischen Farbe bestimmt sind;
* auf die Gesamtheit der Informationen, die zur Übertragung durch die Relaisvorrichtung mit der spezifischen Farbe bestimmt sind, Algorithmen zum Annullieren von systeminternen Interferenzen anzuwenden, und
* an die Relaisvorrichtung die Gesamtheit der Informationen zu übertragen, die zur Übertragung durch die Relaisvorrichtung mit der spezifischen Farbe bestimmt sind.

8. Terrestrische Station (GW1 bis GW24) eines Telekommunikationssystems mit geografischer Multi-Spot-Abdeckung, umfassend einen Hin-Weg zur Übertragung der Informationen über eine Relaisvorrichtung vom Typ Satellit oder Flugzeug von einer Vielzahl terrestrischer Stationen an eine Vielzahl von Endgeräten, die in Spots lokalisiert sind, die in einer terrestrischen geografischen Abdeckungszone verteilt sind, wobei der Hin-Weg eine Vielzahl aufsteigender Verbindungen umfasst, jede von einer der terrestrischen Stationen zu der Relaisvorrichtung, und eine Vielzahl absteigender Verbindungen, jede von der Relaisvorrichtung zu einem der Spots, wobei jede der absteigenden Verbindungen einer Farbe in einem Wiederverwendungsschema mit N Farben zugeordnet ist, mit N≥2, wobei jede Farbe einem unterschiedlichen Frequenzband oder einem unterschiedlichen Paar entspricht, das ein Frequenzband und eine Polarisierung zuordnet, wobei die terrestrische Station **dadurch gekennzeichnet, dass** sie:
- einer spezifischen Sub-Farbe von M Sub-Farben (sc1 bis sc6) zugeordnet ist, die aus der Teilung einer bestimmten Farbe resultiert, wobei die M Sub-Farben (sc1 bis sc6; sc1 bis sc24) jeweils einem Sub-Band des Frequenzbands zugeordnet sind, das der bestimmten Farbe oder einem unterschiedlichen Paar zugeordnet ist, das ein Sub-Band des Frequenzbands, das der bestimmten Farbe zugeordnet ist, und die Polarisierung, die der bestimmten Farbe zugeordnet ist, zuordnet, wobei jede absteigende Verbindung, die der bestimmten Farbe zugeordnet ist, die M Sub-Farben verwendet, mit M≥2, und:
- ausgelegt ist, um
* ohne eine Kommunikationsverbindung mit den anderen terrestrischen Stationen oder eine Kommunikationsverbindung mit einem einzigen Punkt herzustellen, der Kenntnis über alle Informationen hat, die über die absteigenden Verbindungen zu übertragen sind, die Gesamtheit der Informationen zu erhalten, die zur Übertragung durch die Relaisvorrichtung mit der spezifischen Sub-Farbe bestimmt sind;
* auf die Gesamtheit der Informationen, die zur Übertragung durch die Relaisvorrichtung mit der spezifischen Sub-Farbe bestimmt sind, Algorithmen zum Annullieren von systeminternen Interferenzen anzuwenden; und
* an die Relaisvorrichtung die Gesamtheit der Informationen zu übertragen, die zur Übertragung durch die Relaisvorrichtung mit der spezifischen Sub-Farbe bestimmt sind.

## Claims

1. A telecommunication method in a multi-spot geographic coverage system comprising a forward path to transmit information, via a satellite or aircraft type relay device (1), from a plurality of terrestrial stations (GW1 to GW4, Figure 4) to a plurality of terminals (Ti to T1) located in spots (spots 1 to spot 16) distributed in a terrestrial geographical coverage area, the forward path comprising a plurality of uplinks (2a), each from one of the terrestrial stations to the relay device, and a plurality of downlinks (3a to 6a), each from the relay device to one of the spots, each of the downlinks being associated with a colour (C_{1,d} to C_{4,d}) in a N-colour reuse scheme, with N≥2, each colour corresponding to a distinct frequency band or to a distinct pair associating a frequency band and a polarisation, **characterised in that** each of N terrestrial stations is dedicated to a specific colour among the N colours, and:
* obtains, without establishing a communication link with the other terrestrial stations or a communication link with a single point having knowledge of all information to be transmitted on the downlinks, the entirety of information intended to be transmitted by the relay device with said specific colour;
* applies intra-system interference cancellation algorithms to said entirety of information intended to be transmitted by the relay device with said specific colour; and
* transmits, to the relay device, said entirety of information intended to be transmitted by the relay device with said specific colour.

2. A telecommunication method in a multi-spot geographic coverage system comprising a forward path to transmit information, via a satellite or aircraft type relay device (1), from a plurality of terrestrial stations (GW1 to GW24, Figure 5A) to a plurality of terminals (Ti to T1) located in spots (spots 1 to spot 144) distributed in a terrestrial geographical coverage area, the forward path comprising a plurality of uplinks (2a), each from one of the terrestrial stations to the relay device, and a plurality of downlinks (3a to 6a), each from the relay device to one of the spots, each of the downlinks being associated with a colour (C_{1,d} to C_{4,d}) in a N-colour reuse scheme, with N≥2, each colour corresponding to a distinct frequency band or to a distinct pair associating a frequency band and a polarisation, **characterised in that** each of M terrestrial stations is dedicated to a specific colour among M sub-colours (sc1 to sc6) resulting from the division of a given colour, the M sub-colours (sc1 to sc6; sc1 to sc24) each being associated with a sub-band of the frequency band associated with the given colour or with a distinct pair associating a sub-band of the frequency band associated with the given colour and the polarisation associated with the given colour, each downlink associated with said given colour using the M sub-colours, with M≥2, and:
* obtains, without establishing a communication link with the other terrestrial stations or a communication link with a single point having knowledge of all information to be transmitted on the downlinks, the entirety of information intended to be transmitted by the relay device with said specific colour;
* applies intra-system interference cancellation algorithms to said entirety of information intended to be transmitted by the relay device with said specific colour; and
* transmits, to the relay device, said entirety of information intended to be transmitted by the relay device with said specific sub-colour.

3. The method according to claim 2, **characterised in that** each of S terrestrial stations (GW1 to GW24, Figure 5A) is dedicated to a specific sub-colour among S sub-colours and transmits to the relay device all information intended to be transmitted by the relay device with said specific sub-colour, where S=M₁+M₂+...+M_{N}, with *Mᵢ* the number of sub-colours of the i^{th} of the N colours, i ∈ {1... *N*}*.*

4. The method according to claim 3, **characterised in that** the N colours each comprise M sub-colours.

5. The method according to claim 1, **characterised in that**, for at least two sub-colours (sc1 to sc24) each resulting from a division of a distinct colour among the N colours, one of the terrestrial stations (GW1 to GW24, Figure 7A) transmits, to the relay device, all information intended to be transmitted by the relay device with said at least two sub-colours.

6. The method according to claim 5, **characterised in that** the N colours each comprise M' sub-colours (sc1 to sc24), and **in that** each of M' terrestrial stations (GW1 to GW24, Figure 7A) is dedicated to a j^{th} specific sub-colour of each of the N colours, j ∈ {1... *M'*}, and transmits to the relay device all information intended to be transmitted by the relay device with the N j^{th} specific sub-colours of the N colours.

7. A terrestrial station (GW1 to GW24) of a multi-spot geographic coverage telecommunication system and comprising a forward path to transmit information, via a satellite or aircraft type relay device, from a plurality of terrestrial stations to a plurality of terminals located in spots distributed in a terrestrial geographical coverage area, the forward path comprising a plurality of uplinks, each from one of the terrestrial stations to the relay device, and a plurality of downlinks, each from the relay device to one of the spots, each of the downlinks being associated with a colour in a N-colour reuse scheme, with N≥2, each colour corresponding to a distinct frequency band or to a distinct pair associating a frequency band and a polarisation, said terrestrial station being **characterised in that** it is:
- dedicated to a specific colour among the N colours; and:
- configured to:
* obtain, without establishing a communication link with the other terrestrial stations or a communication link with a single point having knowledge of all information to be transmitted on the downlinks, the entirety of information intended to be transmitted by the relay device with said specific colour;
* apply intra-system interference cancellation algorithms to said entirety of information intended to be transmitted by the relay device with said specific colour; and
* transmit to the relay device said entirety of information intended to be transmitted by the relay device with said specific colour.

8. A terrestrial station (GW1 to GW24) of a multi-spot geographic coverage telecommunication system and comprising a forward path to transmit information, via a satellite or aircraft type relay device, from a plurality of terrestrial stations to a plurality of terminals located in spots distributed in a terrestrial geographical coverage area, the forward path comprising a plurality of uplinks, each from one of the terrestrial stations to the relay device, and a plurality of downlinks, each from the relay device to one of the spots, each of the downlinks being associated with a colour in a N-colour reuse scheme, with N≥2, each colour corresponding to a distinct frequency band or to a distinct pair associating a frequency band and a polarisation, said terrestrial station being **characterised in that** it is:
- dedicated to a specific colour among M sub-colours (sc1 to sc6) resulting from the division of a given colour, the M sub-colours (sc1 to sc6; sc1 to sc24) each being associated with a sub-band of the frequency band associated with the given colour or with a distinct pair associating a sub-band of the frequency band associated with the given colour and the polarisation associated with the given colour, each downlink associated with said given colour using the M sub-colours, with M≥2; and
- configured to:
* obtain, without establishing a communication link with the other terrestrial stations or a communication link with a single point having knowledge of all information to be transmitted on the downlinks, the entirety of information intended to be transmitted by the relay device with said specific colour;
_{*} apply intra-system interference cancellation algorithms to said entirety of information intended to be transmitted by the relay device with said specific sub-colour; and
* transmit, to the relay device, said entirety of information intended to be transmitted by the relay device with said specific sub-colour.
